# EUROPÄISCHE PATENTANMELDUNG

(11) **EP 0 749 807 A1**
(43) Veröffentlichungstag der Anmeldung: **27.12.1996**
(21) Anmeldenummer: 96810280.6
(22) Anmeldetag: 01.05.1996
(51) Int. Cl.: B25B 23/04

(54) **Transportvorrichtung für ein streifenförmiges Schraubenmagazin**

(30) Priorität: 23.06.1995 DE 19522814
(71) Anmelder: HILTI Aktiengesellschaft, 9494 Schaan (LI)
(72) Erfinder: Daubinger, Gerd, 80935 München (DE); van Egeraat, Hendrik A., 70340 Örebro (SE)
(74) Vertreter: Wildi, Roland

(57) **Zusammenfassung**

Die Transportvorrichtung für ein streifenförmiges Schraubenmagazin (3) weist ein eine Steuerkurve aufweisendes Gehäuse (1), ein gegenüber dem Gehäuse (1) parallel zur Schraubensetzrichtung gegen die Kraft einer Feder (4) verstellbares Führungselement (2) mit einem Führungskanal (15) für das Schraubenmagazin (3) und einen im wesentlichen rechtwinklig zur Schraubensetzrichtung gegen die Kraft eines Federelementes (9) bewegbaren Schieber (6) mit Transportklinke (7) auf. Das Führungselement (2) weist eine Transportschiene (5) für den Schieber (6) auf und der Schieber (6) besitzt eine mit der Steuerkurve zusammenwirkende Gegenfläche (11).

## Beschreibung

Die Erfindung betrifft eine Transportvorrichtung für ein streifenförmiges Schraubenmagazin mit einem eine Steuerkurve aufweisenden Gehäuse, einem gegenüber dem Gehäuse parallel zur Schraubensetzrichtung, gegen die Kraft einer Feder verstellbaren Führungselement mit einem Führungskanal für das Schraubenmagazin und einem im wesentlichen rechtwinklig zur Schraubensetzrichtung gegen die Kraft eines Federelementes bewegbaren Schieber mit Transportklinke.

Aus der DE-PS 26 41 828 ist eine Transportvorrichtung für ein streifenförmiges Schraubenmagazin bekannt. Die Transportvorrichtung setzt sich aus einem Gehäuse, einem gegenüber dem Gehäuse parallel zur Schraubensetzrichtung, gegen die Kraft einer Feder verstellbaren Führungselement und einem im wesentlichen rechtwinklig zur Schraubensetzrichtung gegen die Kraft eines Federelementes bewegbaren Schieber mit Transportklinke zusammen. Das Gehäuse weist im setzrichtungsseitigen Bereich eine Steuerkurve auf, die mit einer am Schieber angeordneten Rolle zusammenwirkt, wenn das Gehäuse in Schraubensetzrichtung relativ zum Führungselement bewegt wird. Der in Form eines federbelasteten Kniehebels ausgebildete Schieber wird dabei um zwei an dem Führungselement angeordnete Drehpunkte verschwenkt. Dabei erfährt das freie Ende des Schiebers eine Schwenkbewegung, die ein gegenüber der Schraubensetzrichtung im wesentlichen rechtwinkliges Versetzen der an dem Schieber angeordneten, federbelasteten Transportklinke bewirkt. Nachdem die Transportklinke den Schaft einer Schraube hintergriffen hat, wird das streifenförmige Schraubenmagazin in Richtung Führungselement transportiert, wenn sich das Gehäuse entgegen der Schraubensetzrichtung relativ zum Führungselement bewegt und der Schieber seine Ruhestellung wieder einnimmt. Der Transportweg des Schraubenmagazins entspricht dem Abstand zwischen zwei am Schraubenmagazin angeordneten Schrauben.

Der als federbelastete Kniehebel ausgebildete Schieber dieser bekannten Transportvorrichtung ist sehr aufwendig in seinem Aufbau und nur mit grösserem Aufwand montierbar. Diese bekannte Transportvorrichtung ist somit nicht wirtschaftlich herstellbar.

Ein in den rechtwinklig zur Schraubensetzrichtung verlaufenden Führungskanal des Führungselementes eingesetztes Schraubenmagazin muss, wenn die Transportklinke eine Schraube hintergreift, zur Gänze durch den Führungskanal gezogen werden, wenn man das Schraubenmagazin aus der Transportvorrichtung entfernt. Eine Versetzung der Transportklinke in eine Freigabestellung ist bei dieser bekannten Transportvorrichtung nicht möglich.

Der Erfindung liegt die Aufgabe zugrunde, eine mit einem Schraubgerät in Verbindung bringbare Transportvorrichtung für ein streifenförmiges Schraubenmagazin zu schaffen, die wirtschaftlich herstellbar ist, und bei der eine Betätigung der Transportklinke von aussen möglich ist, so dass ein in den Führungskanal eingesetztes Schraubenmagazin auch auf jener Seite des Führungskanals enffernt werden kann, auf der die Zufuhr erfolgt ist.

Erfindungsgemäss wird die Aufgabe dadurch gelöst, dass das Führungselement eine Transportschiene für den Schieber aufweist und der Schieber eine mit der Steuerkurve zusammenwirkende Gegenfläche besitzt.

Auf diese Weise wird eine einfache, wirtschaftlich herstellbare Transportvorrichtung geschaffen. Da der Schieber ausserhalb des Führungselementes und ausserhalb des Gehäuses angeordnet ist, kann auch die am Schieber angeordnete Transportklinke mit der Hand erfasst und in eine Freigabestellung verschwenkt werden.

Die wirtschaftliche Herstellung einer Transportvorrichtung wird nur dann gewährleistet, wenn die zugehörigen Einzelteile einfach zu fertigen und einfach zu montieren sind. Die Steuerkurve der erfindungsgemässen Transportvorrichtung ist daher zweckmässigerweise von einer in Setzrichtung geneigten Fläche des Gehäuses und die Gegenfläche von einer entsprechend geneigten Fläche des Schiebers gebildet. Beim Bewegen des Gehäuses in Schraubensetzrichtung relativ zum Führungselement bewirkt die Steuerkurve eine Versetzung des auf der Transportschiene geführten Schiebers im wesentlichen rechtwinklig zur Schraubensetzrichtung. Ein an der Transportschiene angeordnetes, mit dem Schieber zusammenwirkendes Federelement wird bei diesem Bewegungsvorgang vorgespannt.

Die Querschnittsfläche der im wesentlichen rechtwinklig von dem Führungselement abragenden Transportschiene ist kleiner als der lichte Querschnitt des die Transportschiene wenigstens teilweise umgreifenden Schiebers. Auf diese Weise wird vorzugsweise von der Transportschiene und dem Schieber ein gemeinsamer Führungsschacht für das Schraubenmagazin gebildet, der zumindest teilweise koaxial zum Führungskanal des Führungselementes verläuft. Der im setzrichtungsseitigen Bereich der Transportschiene angeordnete Führungsschacht dient der Aufnahme des Streifens des Schraubenmagazins und der Schraubenköpfe.

Um eine gute Zugänglichkeit zu Bearbeitungsstellen gewährleisten zu können, ist es von Vorteil, dass das Schraubenmagazin in Bezug auf die Längsrichtung der Transportvorrichtung geneigt zugeführt wird. Damit ein Einlaufen des Schraubenmagazins in den Führungsschacht erleichtert wird, sind vorteilhafterweise der Führungskanal, die Transportschiene und der Führungsschacht unter einem Winkel von 70° bis 90° geneigt zur Schraubensetzrichtung angeordnet.

Aus herstellungstechnischen Gründen ist die Transportschiene vorzugsweise lösbar an dem Führungsteil angeordnet. Führungselement und Transportschiene sind dadurch kostengünstig und wirtschaftlich herstellbar.

Die Erfindung wird anhand eines Ausführungsbeispieles näher erläutert.

Die dargestellte Transportvorrichtung ist mit dem schraubensetzrichtungsseitigen Bereich eines nicht dargestellten Schraubgerätes verbunden und setzt sich im wesentlichen aus einem Gehäuse 1, einem Führungselement 2, einer Feder 4, einer an dem Führungselement 2 unter dem Winkel W zur Schraubensetzrichtung angeordneten Transportschiene 5, einem Schieber 6, einer federbelasteten Transportklinke 7 , einer zum Schraubgerät gehörenden Schrauberklinge 23 und einem Anschlagelement 8 zusammen.

In dem Gehäuse 1 befindet sich das Führungsteil 2, das das schraubensetzrichtungsseitige, freie Ende des Gehäuses 1 überragt. Das Führungselement 2 ist gegen die Kraft der zwischen dem Gehäuse 1 und dem Führungselement 2 angeordneten Feder 4 axial versetzbar. Von dem Führungselement 2 ragt rechtwinklig eine Transportschiene 5 ab, entlang der ein Schieber 6 gegen die Kraft eines Federelementes 9 versetzbar ist.

Die Querschnittsfläche der im wesentlichen rechtwinklig von dem Führungselement 2 abragenden Transportschiene 5 ist kleiner als der lichte Querschnitt des die Transportschiene 5 wenigstens teilweise umgreifenden Schiebers 6. Auf diese Weise wird vorzugsweise von der Transportschiene 5 und dem Schieber 6 ein gemeinsamer Führungsschacht 21 für das Schraubenmagazin 3 gebildet, der zumindest teilweise koaxial zum Führungskanal 15 des Führungselementes 2 verläuft. Der im setzrichtungsseitigen Bereich der Transportschiene 5 angeordnete Führungsschacht 21 dient der Aufnahme des Streifens 13 des Schraubenmagazins 3 und den Schraubenköpfen 24.

Die Versetzung dieses Schiebers 6 um einen Weg S erfolgt in Abhängigkeit der Lage des Führungsteils 2 gegenüber dem Gehäuse 1. An der schraubensetzdchtungsseitigen Stimseite des Gehäuses 1 ist eine sich in Schraubensetzrichtung veflüngende Steuerkurve in Form einer geneigten Fläche 10 angeordnet, die mit einer entsprechend geneigten Gegenfläche 11 an dem Schieber 6 zusammenwirkt. Während des Setzvorganges einer Schraube 12 wird das Gehäuse 1 in Schraubensetzrichtung relativ zum Führungselement 2 bewegt. Die am Gehäuse 1 geneigte Fläche 10 gleitet an der Gegenfläche 11 des Schieber 6 entlang und verschiebt diesen rechtwinklig zur Schraubensetzrichtung nach aussen.

Eine an dem Schieber 6 angeordnete, federbelastete Transportklinke 7 wird beim Versetzen gegenüber einer Schraube 12 vorgespannt und hintergreift diese, sobald die Transportklinke 7 an dem Schaft der Schraube 12 nicht mehr anliegt.

Diese Transportklinke 7 weist Angriffmittel in Form eines Flügels 22 auf, der das manuelle Erfassen und somit das Verschwenken der Transportklinke 7 ermöglicht.

Das Vorspannen dieser Transportklinke 7 ist nur dann möglich, wenn der Streifen 13 des Schraubenmagazins 3 gegenüber dem Führungselement 2 festgelegt werden kann, so dass sich der Streifen 13 nicht zusammen mit dem Schieber 6 bewegt. Zu diesem Zweck befindet sich an dem Führungsteil 2 ein hülsenförmiges Anschlagelement 8 mit einer schraubensetzrichtungsseitigen Anschlagfläche 14 und einem rechtwinklig zur Schraubensetzrichtung verlaufenden Führungskanal 15. Das Anschlagelement 8 umgibt das Führungselement 2 wenigstens teilweise und ist gegenüber dem Führungselement 2 axial versetzbar. Die schraubensetzrichtungsseitige Stimseite 16 des Führungselementes 2 und die entgegen der Schraubensetzrichtung verlaufenden Anschlagteile 17 des an dem Anschlagelement 8 angeordneten Führungskanals 15 bewegen sich beim Andrücken der Transportvorrichtung gegen die Oberfläche O eines zu befestigenden Untergrundes U zueinander und verklemmen den dazwischen liegenden Streifen 13 des Schraubenmagazins 3. Nach dem Eindrehen einer Schraube 12 wird die Transportvorrichtung vom Untergrund U abgehoben, so dass sich das Anschlagelement 8 gegenüber dem Führungselement 2 wiederum in Schraubensetzrichtung bewegt. Gleichzeitig mit der Versetzung des Anschlagelementes 8 erfolgt auch eine Versetzung des Gehäuses 1 gegenüber dem Führungselement 2 und des über die geneigte Fläche 10 und die geneigte Gegenfläche 11 vorgespannten Schiebers 6 zusammen mit dem Schraubenmagazin 3.

Das Anschlagelement 8 ist mittels eines Befestigungselementes 20 in Form einer Schraube mit einer der am Führungselement 2 angeordneten Bohrungen 18 mit dem Führungselement 2 verbunden. Die axiale Versetzung des Anschlagelementes 8 gegenüber dem Führungselement 2 erfolgt mit Hilfe eines parallel zur Schraubensetzrichtung verlaufenden Langloches 19, durch das das Befestigungselement 20 hindurchragt. Die Breite des Langloches 19 ist geringfügig grösser ausgebildet, als der Schaftdurchmesser des Befestigungselementes 20.

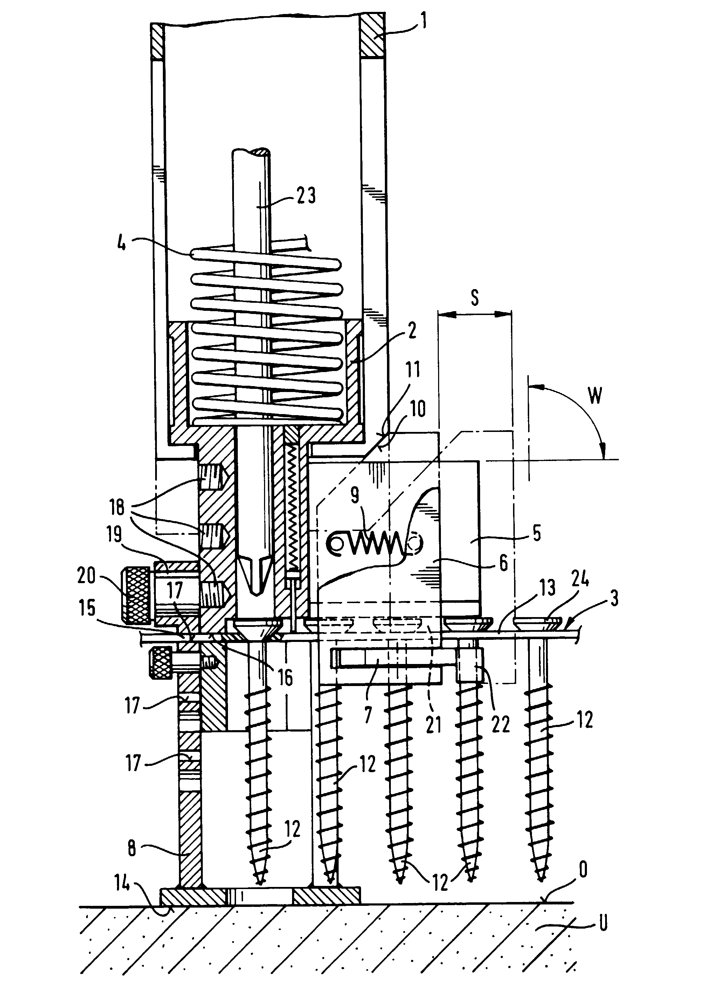

## Patentansprüche

1. Transportvorrichtung für ein streifenförmiges Schraubenmagazin (3) mit einem eine Steuerkurve aufweisenden Gehäuse (1), einem gegenüber dem Gehäuse (1) parallel Schraubensetzrichtung, gegen die Kraft einer Feder (4) verstellbaren Führungselement (2) mit einem Führungskanal (15) für das Schraubenmagazin (3) einem im wesentlichen rechtwinklig zur Schraubensetzrichtung gegen die Kraft eines Federelementes (9) bewegbaren Schieber (6) mit Transportklinke (7), **dadurch gekennzeichnet**, dass das Führungselement (2) eine Transportschiene (5) für den Schieber (6) aufweist und der Schieber (6) eine mit der Steuerkurve zusammenwirkende Gegenfläche (11) besitzt.

2. Vorrichtung nach Anspruch 1, dadurch gekennzeichnet, dass die Steuerkurve von einer in Sotzrichtung geneigten Fläche (10) des Gehäuses (1) und die entsprechende Gegenfläche (11) von dem Schieber (6) gebildet sind.

3. Vorrichtung nach einem der Ansprüche 1 oder 2, dadurch gekennzeichnet, dass die Transportschiene (5) und der Schieber (6) einen gemeinsamen Führungsschacht (21) für das Schraubenmagazin (3) bilden, der zumlndest teilweise koaxial zum Führungskanal (15) des Führungselementes (2) verläuft.

4. Vorrichtung nach Anspruch 3, dadurch gekennzeichnet, dass der Führungskanal (15), die Transportschiene (5) und der Führungsschacht (21) unter einem Winkel (W) von 70° bis 90° geneigt zur Schraubensetzrichtung angeordnet sind.

5. Vorrichtung nach einem der Ansprüche 1 bis 4, dadurch gekennzeichnet, dass die Transportschiene (5) lösbar an dem Führungselement (2) angeordnet ist.
